# EUROPEAN PATENT SPECIFICATION

(11) **EP 1 685 351 B1**
(45) Date of publication and mention of the grant of the patent: **14.01.2009**
(21) Application number: 04768440.2
(22) Date of filing: 10.09.2004
(51) Int. Cl.: F24F 11/00, G05D 23/19

(54) **CONTROL METHOD AND APPARATUS FOR AN AIR CONDITIONER USING OCCUPANT FEEDBACK**
STEUERVERFAHREN UND VORRICHTUNG FÜR EINE KLIMAANLAGE UNTER VERWENDUNG VON BEWOHNERRÜCKKOPPLUNG
PROCEDE ET APPAREIL DE COMMANDE POUR CLIMATISEUR D'AIR UTILISANT UNE RETROACTION DE L'OCCUPANT

(30) Priority: 11.09.2003 GB 0321305
(43) Date of publication of application: 02.08.2006
(73) Proprietor: Dr. Hoe, Khoo Teck, Reading RG6 6AH (GB)
(72) Inventor: KHOO, Teck Hoe, Berkshire RG30 2AR (GB)
(74) Representative: Frost, Alex John
(86) International application number: PCT/GB2004/003893
(87) International publication number: WO 2005/024311

(56) References cited:
- EP-A- 0 631 219
- US-A- 5 145 112
- US-A- 5 170 935
- US-A- 5 570 838
- US-A- 6 145 751
- PATENT ABSTRACTS OF JAPAN vol. 0092, no. 72 (M-425), 30 October 1985 (1985-10-30) & JP 60 117041 A (TOSHIBA KK), 24 June 1985 (1985-06-24)

## Description

### Technical Background

This invention relates to a method and apparatus for controlling indoor environments using occupant feedback. In particular, but not exclusively, the invention relates to a method for determining a value by which for each of a plurality of heating ventilation and air-conditioning (HVAC) system sensor set-points should be adjusted to account for occupant's discomfort in an environment.

### Background to the invention

HVAC systems provide thermal comfort for occupants of a room. The aim of a HVAC system is to provide occupants with a clean, fresh and comfortable environment. Conventional HVAC systems may incorporate (but may not be limited to) the means of ventilation, energy recovery, filtration, disinfection, ionisation, odour regulation, humidification and thermal regulation to the indoor environment(s) it controls. Such environmental controls can be done through the supply of conditioned air or via other regulatory HVAC devices, for example chilled or heated radiators within the occupied environment. In conventional HVAC systems, the temperature of a room (or zone, or environment) is the regulatory parameter available to occupants allowing direct feedback to the HVAC system to improve the environmental conditions. The means of such feedback is by a dedicated manually adjustable wall-mounted thermostats. This thermostat is typically the only means by which the HVAC controller can obtain feedback of how the room's occupants are feeling and the ambient temperature at which they require the room to be. On a given day, the set-point of the thermostat might need to be changed. For instance, if the temperature outside is relatively hot, then the occupants may wish to provide a cool environment in the room, whereas, if the temperature is cold outside, the occupants of the room might wish to provide a warmer ambient temperature in the room.

For larger multi-zone HVAC systems, a building energy management system (BEMS) can be incorporated to manage the supervisory control of the HVAC system and to ensure proper and integrated control of each unitary HVAC device within the system. Such supervisory control ensures that the temperature and other environmental conditions in each zone reaches its pre-set set-points in a timely and controlled fashion.. Typically, BEMS systems are computer based and offer web-browser based interfaces over which the current status of the building service system can be managed by a trained operator. The current status data can include sensor values (from thermostat sensors in the occupant's room or the air-conditioning unit), actuator positions, or plant status, for instance.

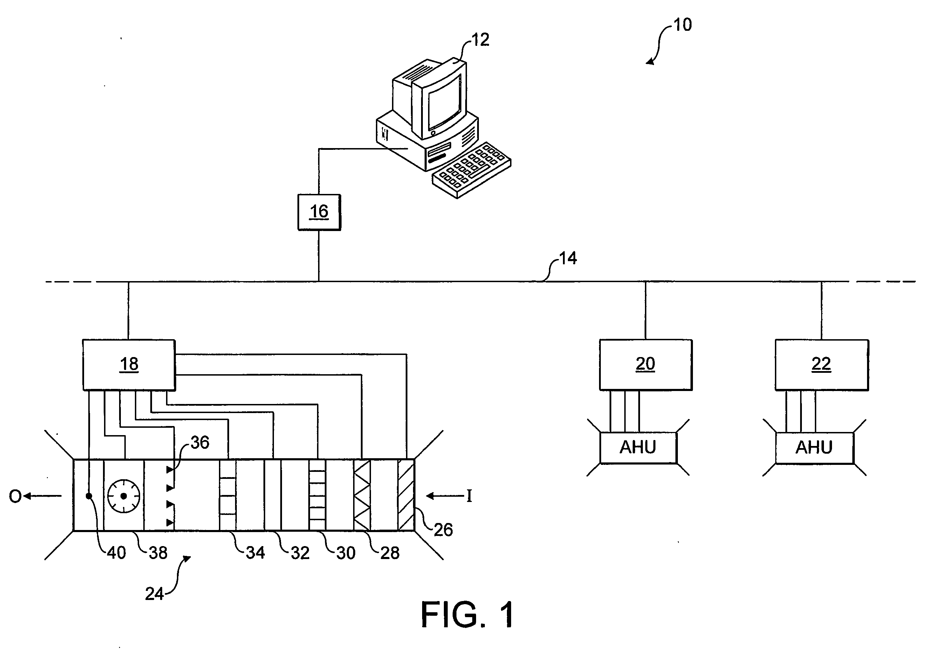

A typical BEMS is shown schematically in figure 1. The BEMS 10 comprises an operator's terminal 12 which is connected to a network 14 via an appropriate interface 16. The network comprises several outstations 18, 20 and 22, each of which controls an air-conditioning (AC) unit 24. The AC unit comprises a damper 26, filter 28, preheater coil 30, cooling coil 32, reheater coil 34, steam humidifier 36, supply fan 38 and sensor 40.

Also, each outstation can be arranged to control different HVAC devices within the system. Hence one outstation may be dedicated to control a central Air Handling Unit (AHU) 24 in which input-output (IO) signals may come from and to built-in HVAC devices (e.g. Dampers, filters, etc) to provide correctly conditioned air to each zone. Other outstations may be located near each occupied zone to regulate room temperature and control local room HVAC devices e.g. radiator valves, terminal unit dampers.

Air enters the AC unit through the damper, as indicated by arrow I, and conditioned air exits the unit as indicated by arrow O. Each component of the AC unit is controlled by the outstations 18, and each outstation 18, 20 or 22 are controlled by the operator's terminal. Each outstation may incorporate local controller(s) which regulate each individual HVAC device it controls to a specific set-point. Each outstation set-point can be reset from algorithms running on the BEMS supervisory/operator terminal 12 or by a trained operator via the BEMS network. This system arrangement only allows limited control of the environment by occupants within the environmental space. Occupants have control only by adjusting a thermostat within the environment, as discussed above. The thermostat's set-point value is communicated to the operator's terminal via the local outstation which determines the necessary action required by the relevant local HVAC device(s), for example a command to open a radiator valve or a terminal unit damper to heat or cool the room may be required so that the environment in which the thermostat is located can be adjusted to reach the thermostat set-point.

A paper by Perry, M et al, "Power to the workers", published in The Building Services Journal, 1999, describes a democratic user control of zone temperature (DUCOZT) system which has identified the need for improved occupant feedback for building services control via a BEMS. The DUCOZT system polls user's temperature preferences and automatically adjusts the set-point according to a voting pattern in each zone of a room. The occupants vote on whether they wish the environment to be warmer or cooler using an application on a PC terminal at their workstation. Votes from occupants in the same zones are collated and a percentage of staff wishing to change the environment is calculated. The calculated result is sent to a BEMS and the temperature set-point is appropriately adjusted, if at all. The paper does not provide any information regarding methodology or implementation of such a system.

US 6,145,751 (Siemens Building Technology) describes a system which allows occupants of a room to enter thermal comfort information using an interface such as a PC, or computer terminal. The information is transmitted over an existing internet/intranet network to a building automation system which in turn communicates with the HVAC system via a local controller. A unique user identification code is used to identify the occupant, the relevant area of the building (where the occupant is located) and the relevant thermostat for which a set-point needs to be set in accordance with the user's requirements.

The system uses fuzzy logic in a democratic process to determine the air temperature in the room. For instance, if 75% of respondents feel slightly cool and 25% feel cool, the fuzzy logic engine determines a value for the room temperature based on this perception of all the occupant's feedback, which is then compared to a thermostat's set-point. A crisp value calculated from the difference between the room temperature and thermostat set-point is inputted into a linear rule to obtain the value by which the thermostat's set-point needs to be adjusted to achieve a comfortable environment for the occupants. This linear rule needs to be tuned to occupant's needs and the type of building or activity being undertaken in the environment.

In another embodiment described in US 6,145,751, a PMV sensor (thermal comfort sensor) output (or set-point) is based on six factors, namely dry bulb temperature, relative humidity, mean radiant temperature, air velocity, metabolic rate and clothing insulation value. The PMV sensor outputs an index value which is related to the human sense of thermal comfort.

The process for determining a set-point value for the PMV sensor includes obtaining subjective occupant expression of thermal comfort as a collection of fuzzy data. A weighting factor of each fuzzy data value represents a percentage of users responding. The fuzzy sets are used to convert the user's subjective feedback into a crisp value for the PMV set-point using a defuzzifying method on each fuzzy set.

The defuzzifying method comprises obtaining occupant feedback fuzzy data relating to their comfort, which is defuzzifyed to obtain a crisp value associated with room temperature. The crisp value is then compared to the sensor set point and a difference between these values is obtained and further fuzzified using another set of fuzzy logic sets. This fuzzified data is then defuzzified using another group of fuzzy logic sets to obtain a new sensor set point.

The processor used to calculate the PMV sensor set-point requires six factors, five of which are obtained from the occupants of a room, namely comfort sensation, draft sensation, humidity, metabolic rate, and clothing insulation. Radiant air temperature information is determined from a look-up table. The occupant's perceptions are individually to provide six crisp values used to calculate a PMV sensor set-point value using the methods described above.

Fanger's comfort model can be used to determine a predicted mean vote (PMV) value using a seven point ASHRAE or Bedford scale. (Fanger's model forms the basis of the ISO7730 standard and is described further on the following internet pages, as published on 1 September 2003: http://www.unl.ac.uk/LEARN/student/info/notes/comfort/comfor t.html, and at http://ergo.human.cornell.edu/studentdownloads/DEA350notes/T hermal/thcomnotes2.html). The final equation for optimal thermal comfort is relatively complex. There are problems associated Fanger's model, namely that the type of activity and type of clothing worn by the occupant needs to be known along with an estimation of the occupants skin wetness. This makes the application of the model to provide a steady state environment very difficult, particularly since there are these intrinsically variable situations within the model. For instance, the model needs to account for the type of clothes worn by the persons in the environment, which depends on the several factors, including the time of year, and what each person feels comfortable wearing. Furthermore, the metabolic activity of people in the environment needs to be accounted for. This can be difficult to ascertain, particularly for a multipurpose area in which different types of activity can take place. For instance, a community hall might be used for art lessons at one moment, followed shortly thereafter by an aerobics class. Using Fanger's model (or derivatives thereof) therefore requires several inputs from the users (including activity and clothing of the users) to adjust a thermal set-point on a thermostat.

The Building Services Research and Information Association (BSRIA) of Bracknell, Great Britain (more information about whom is available at www.bsria.co.uk) issue a best practice guide, Technical Note TN9/98, regarding the best practice on adjusting indoor environmental systems, such as like air-conditioning systems, depending on individually perceived occupant discomforts. The guide provides guidance as to which environmental parameter(s) requires adjustment to counter the discomfort of occupants therein. For example, if an occupant is complaining of dry eyes, the best practice remedy would be to lower the temperature in the zone in which that person is located, increase the zone humidity and lower the outdoor air supply rate.

### Summary of the present invention

The present invention aims to ameliorate the problems associated with the prior art by providing a method of determining a command for a device in a heating ventilation air-conditioning (HVAC) system, said device being arranged to control a characteristic of an environment occupied by one or more occupants, the method comprises the steps of:
a) obtaining a plurality of comfort related values from an occupant,
b) inputting said comfort related values into a rule-base, said rule-base being associated with the command for the device and comprising at least one rule, each of the at least one rule having one or more of the comfort related values as an input variable,
c) obtaining a result from each of the at least one rule in the form of fuzzy data,
d) if there are more than one result, combining the fuzzy data results for each of the plurality of rules, and
e) defuzzifying the result or the combination of said results thereby obtaining a crisp device command value.

The method allows one occupant to input a series of data values which relate to their perceived comfort or well-being within the environment. These perceptions are then decoded using fuzzy logic rule-base to provide the necessary command needed to adjust an HVAC device, thereby changing the environment to alleviate the occupant's discomfort. The results of the rules are combined before the defuzzification process to obtain a crisp value used to adjust a device. This means that further calculation of the results obtained is not necessary, reducing the burden on the processor.

Advantageously, the method can be used with a combination of more than one rule-base, each rule-base being associated with a different HVAC device. The inputted data associated with the occupant's discomfort can be crosslinked between, or utilised by different rule-bases to adjust several or all of the HVAC devices. Thus, the occupant's perception of comfort can be used to adjust a plurality of characteristics of the environmental conditions where the occupant is located. In other words, embodiments of the present invention allow occupants of an environment to have near total control of the HVAC system via a BEMS without the assistance of a trained BEMS operator.

The quality of air, which includes freshness, and pollutant levels associated with the provision and occupant control of outside air, can also be controlled by the occupants. The occupants can also have control of single or multiple characteristics from a single or multiple occupant submissions of comfort related values.

The present invention also provides apparatus arranged to determine a command for a device in a heating ventilation air-conditioning (HVAC) system, said device being arranged to control a characteristic of an environment occupied by one or more occupants, the apparatus comprising,
a terminal for inputting a plurality of comfort related values from the one or more occupants,
a rule-base arranged to receive said comfort related values, said rule-base being associated with the command for the device and comprises a plurality of rules, each of the plurality of rules being arranged to receive one or more of the comfort related values as an input variable and arranged to output fuzzy data results, and
a combining engine arranged for combining the fuzzy data results for each of the plurality of rules and arranged for defuzzifying the combination of said fuzzy data results to determine a crisp device command value.

### Brief description of the figures

Embodiments of the present invention are now described by way of examples, with reference to the accompanying drawing, in which:
Figure 1 is a schematic diagram of a building energy management system known in the art;
Figure 2 is a block diagram of a fuzzy logic engine embodying the present invention;
Figure 3 is a representation of a display screen used by an occupant to input comfort related values into an engine embodying the present invention;
Figure 4 is a schematic diagram of the fuzzy logic sets used by rules in the zone temperature sub-engine embodying the present invention;
Figure 5 is a schematic diagram of the fuzzy logic sets used by rules in the zone temperature sub-engine embodying the present invention, but having different input values than those shown in figure 4;
Figure 6 is a schematic diagram of the fuzzy logic sets used by rules in the air flow sub-engine embodying the present invention;
Figure 7 is a schematic diagram of the fuzzy logic sets used by rules in the humidity sub-engine embodying the present invention;
Figure 8 is a schematic diagram of the fuzzy logic sets used by rules in the outside air flow sub-engine embodying the present invention;
Figure 9 is a schematic diagram of the fuzzy logic sets used by rules in the supply temperature sub-engine embodying the present invention; and
Figure 10 is an illustration of operators applied to example crisp and fuzzy sets.

### Description of preferred embodiments of the present invention.

Fuzzy logic is a well known approach to reasoning in which truth values carry labels such as 'true', or 'very true' etc. Rules of inference are thus approximate. A brief discussion by way of an introduction to fuzzy logic methodology is now provided. An example of a comparison between a fuzzy and 'crisp' set might be a determination of whether a person is tall. For instance, in a crisp set, the person is only considered to be tall if they are above a certain height, say six foot. However a fuzzy set provides a degree of membership to the 'tallness' set, depending on the person's height. For instance, a 5'4" high person would have a relatively low membership in the 'tall' fuzzy set, say a 20% membership, whereas a 6'7" person would have a large membership in the tall fuzzy set, say 98%. The shape of the fuzzy set can be determined by statistical data, or can be give a pre-defined shape, such as triangular, trapezoidal or bell-shaped. Various fuzzy sets can be provided for different conditions such as medium build or shortness. In which, from the example given above, the tall person might have a 2% membership of the medium build set and a 0% membership of the short fuzzy set. The 5'4" person, on the other hand, might have a relatively high degree of membership in the medium build fuzzy, and a relatively low membership in the small build set, depending on how each of the fuzzy set are arranged to overlap.

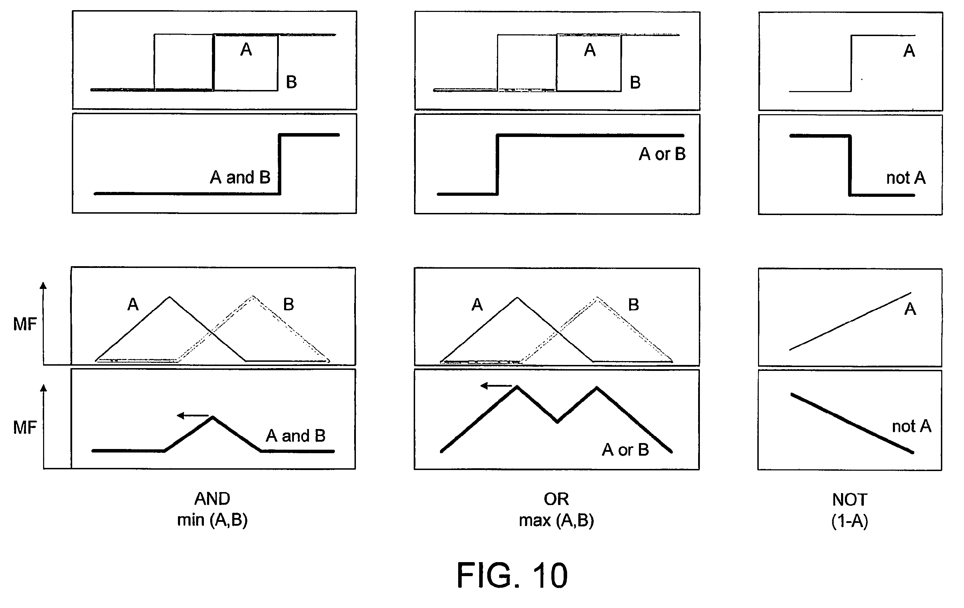

Another fuzzy set could be used to determine whether a person was good-looking. By combining the good-looking fuzzy data with tallness fuzzy data using Boolean operators (such as AND, OR, NOT, etc), a likelihood of a person being asked on a date can be determined. The use and outcome of these operators is well known. For example, the membership function of a set A AND B is the minimum(A,B), as shown in figure 10. Likewise, the OR operator returns a membership function of maximum(A,B) and NOT operator returns (1-A) function.

Another example of how fuzzy logic can be used is to determine the amount of tip one should give at a restaurant, depending on ones perception of the quality of food and quality of service provided. The perceptions are fuzzified, but into a rule and the result defuzzified to obtain a tip value, for example as a percentage of the final bill's value.

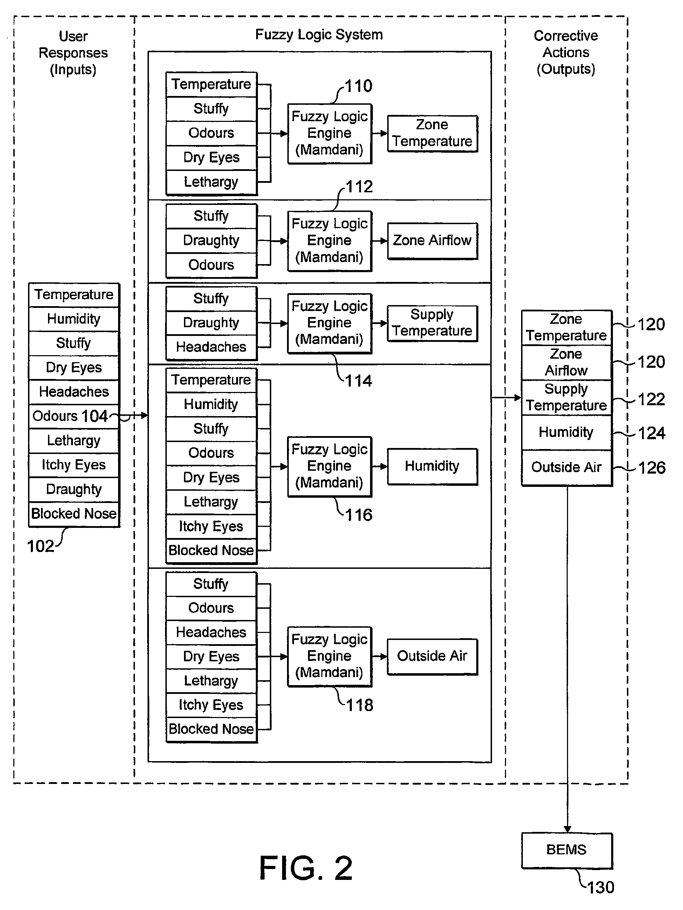

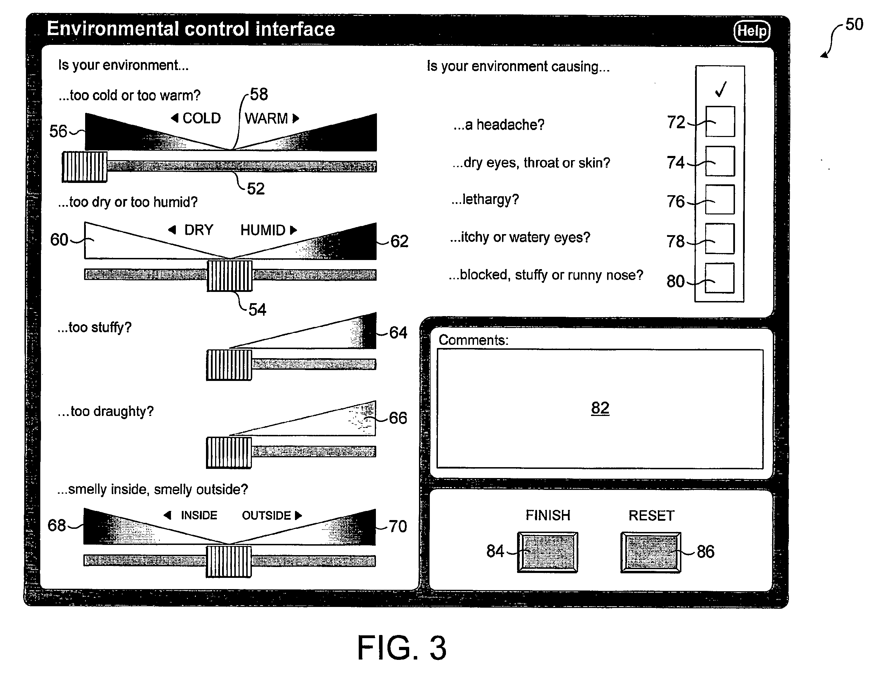

Referring to Figure 2, a block diagram showing the structure of a fuzzy logic engine 100 embodying the present invention is shown in schematic form. Inputs 102 from occupants using an interface shown in figure 3. The input values are associated with how the occupants perceive the conditions in an environment and the data is inputted into the engine in the form of numerical values.

Referring to Figure 3, it can be seen that the interface screen display 50 has a sliding scale 52 used to indicate whether the occupant is feeling too cold or too warm. The occupant is able to move the indicator 54 along the bar. In the example shown in figure 3, the occupant has indicated they are feeling extremely cold and the indicator 54 has been positioned and the extreme left hand side 56 of the sliding scale 58. The interface display 50 also allows the occupant to input whether they feel too dry 60 or too humid 62, too stuffy 64, too drafty 66, whether the occupant can smell odours originating from inside 68 or outside 70 the building or environment using similar sliding bars and indicators.

The occupant can also indicate whether they have a headache 72, dry eyes 74, is feeling lethargic 76, has itchy or watering eyes 78, or a blocked or stuffy nose 80 by input an appropriate 'tick' in the box shown on the interface. The temperature, humidity, stuffiness, draftiness and smell interface allows the user to input a degree of how uncomfortable they are feeling by manipulating the sliding indicators along the each appropriate slide bar. For instance, if the occupant is feeling extremely cold, they can move the slide bar to the extreme left hand side of its running bar. However, if they are feeling only slightly warm then the indicator can be moved just to the right centre of the running bar. Thus, a high degree of flexibility of the occupants comfort perception is provided in the form of fuzzy data from the interface.

The interface display also allows the occupant to input comments which can be parsed and used to influence the HVAC system, or used as feedback to the BEMS operator or maintenance staff to address other discomforts beyond the scope of the interface. A reset 84 and finish 86 (or submit) button can be clicked to reset the input settings or submit the settings respectively.

Referring back to Figure 2, the various input data values from the interface are supplied 104 to the fuzzy logic engine 100. The fuzzy logic engine has five sub-engines 110, 112, 114, 116 and 118, each associated with a VAC system device or devices for controlling environment characteristics or the condition of the air supplied to the environment, which include the temperature 120 of the environment, the flow of air 122 supplied to the environment, the temperature of the air 124 supplied to the environment, the humidity of the air 126 supplied to the environment, and the amount of outside, or fresh air 128 supplied to the environment.

Each of the sub-engines requires some of the input parameters (occupant's perceptions), but not all of the input data. For instance, the zone air flow sub-engine 112 only uses or requires data regarding the occupants perception of stuffiness, draftiness and odours within the room, whereas the zone temperature sub-engine 110 requires data regarding the users perception of temperature, stuffiness, odours, whether they have dry eyes, or whether they are feeling lethargic.

Each of the sub-engines results are then output from the fuzzy logic engine in the form of corrective actions to a BEMS controller unit 130. The BEMS controller is of a standard type. Thus, it can be seen from figure 2 and figure 3 that the occupant within the environment is able to control the BEMS and HVAC system; the occupant not only has control of the zone temperature but also the zone airflow, airflow temperature, humidity and the amount of fresh air entering the environment from outside the environment. If the occupant feels happy with certain aspects of the environment and does not change a setting shown on the interface, the interface returns a zero value to appropriate fuzzy logic engines, as a default value.

Furthermore, the data input by the occupant is interlinked between fuzzy logic sub-engines, thereby providing a relatively high degree of controllability of the HVAC system, compared to prior art systems. Also, the structure of the present invention only requires one defuzzification step in each fuzzy logic sub-engine to obtain a corrective action control value (or values), thereby simplifying the data manipulation required by the present invention compared to the prior art systems described previously. If the occupant's perception of the environment requires adjustment of more than one HVAC device, then the present invention provides corrective actions to each of the devices.

Each sub-engine has a rule-base comprising several rules. The rules are used to obtain a value for the appropriate adjustment to a HVAC device, depending on the occupant's discomfort perception. Examples of the rules used by the preferred embodiment of the present invention are now described below.

The number of fuzzy sets for each input or output parameter can be increased to increase system resolution and flexibility to occupant feedback. The present preferred embodiment only illustrates a smaller limit of fuzzy membership set for easy of explanation.

### Zone temperature sub-engine

The zone temperature sub-engine has four rules, as follows:
Rule 1 - if (temperature is too cold) then raise zone temperature
Rule 2 - if (odour is inside) then lower zone temperature
Rule 3 - if (temperature is too hot) or (stuffy is too stuffy) or (odour is from outside) or (the occupants eyes are dry) or (the occupant is feeling lethargic) then lower zone temperature.
Rule 4 - if (temperature is OK) and (stuffy is Ok) and (odour is OK) and (the occupant does not have dry eyes) and (the occupant is not feeling lethargic) then the zone temperature is not changed.

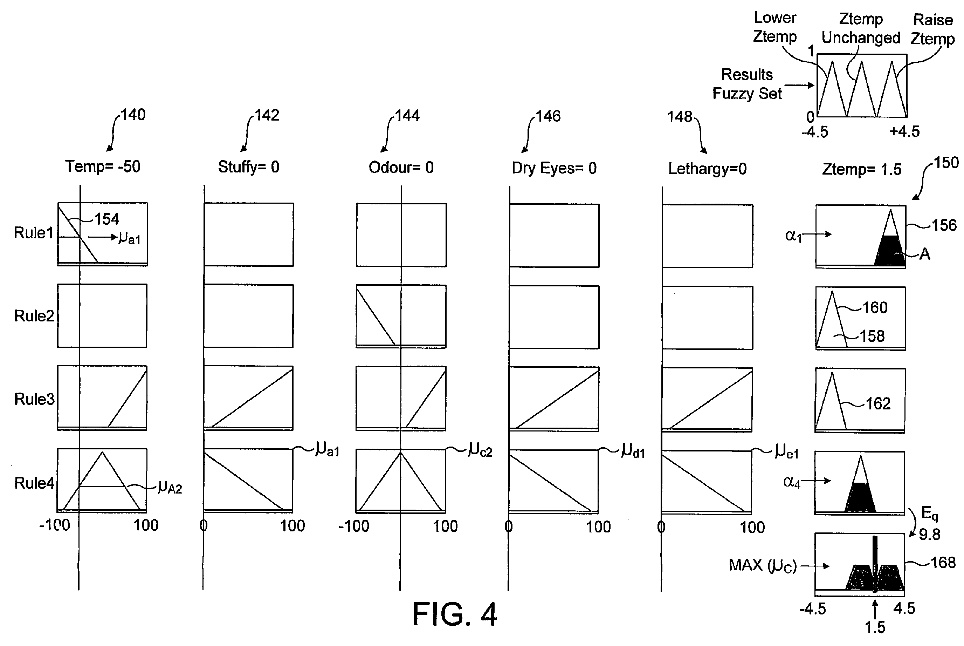

These rules are shown as fuzzy logic sets in Figure 4. Each rule is shown as a row in a table of fuzzy logic sets where the columns are associated with the fuzzy data input by the user. Thus, in Figure 4 the left hand column 140 is shown as the temperature perception, the next column 142 relates to the stuffiness perception, the next column 144 relates to the odour perception of the occupant(s), the next column 146 relates to the dry eyes perception and the next column 148 to the right shows the lethargy perception. The most right hand column 150 shows the results from each rule. Where a cell in a column is blank this indicates that the rule does not use that particular data input from the occupant. For instance Rule 1 has the columns for stuffyness 142, odourness 144, dry eyes 146 and lethargy 148 left blank because these occupant perceptions are not required to obtain a result for rule 1.

It can be seen that Rule 1 has the temperature column has a fuzzy logic set 154 for the occupants perception of feeling too cold. This set has a maximum membership when the occupant is feeling most cold and a reducing membership value to zero where the occupant is feeling fine or too hot. In the example shown in Figure 4, the occupant has input a value which relates to a 50% perception of feeling too cold (that is a value of -50 on a scale of -100 to 100, where - 100 indicates a maximum perception of feeling cold, 0 indicates a perception of felling OK with regards to temperature, and +100 indicates a feeling of feeling too hot). In other words the occupant has placed the indicator bar on their interface display shown in figure 2 half way between being extremely cold and the temperature being considered OK.

The other inputs for the user indicate that they are not feeling stuffy (stuffy =0), they can detect no odours (odour=0), they do not suffer from dry eyes (dry eyes=0), and they are not feeling lethargic (lethargy=0).

The result 156 of Rule 1 shows that the membership of the fuzzy logic set to increase the temperature, Ztemp, is roughly 50% which corresponds to the membership of the temperature fuzzy set in rule 1. This membership indicated by shaded area A.

Rule 2 yields a null result because the odour is considered by the occupant not to be a factor in their discomfort. Thus, the zone temperature lower result from Rule 2 is not populated as indicated by the unshaded area 158 in the appropriate fuzzy output 160.

Likewise, the fuzzy output 162 from Rule 3 is unpopulated because none of the inputs made by the occupant have an effect on the outcome of Rule 3, in this example.

Rule 4 uses all of the inputs from the fuzzy data inputted by the occupant. However, the membership value used to fill the no-change to zone temperature fuzzy logic set output is taken form the minimum membership from each of the occupants inputs by using the AND operator on all the fuzzy sets in rule 4. For instance, in this example stuffy=0, odour=0, dry-eyes= 0 and lethargy= 0 all return maximum membership values as shown by the appropriate fuzzy set for each of these input variables. However, temperature=-50 returns a membership value of approximately 50%. Thus, the zone no change fuzzy set output result is populated to 50% when each of the fuzzy sets are combined using an AND operator.

Each of the results from Rules 1, 2, 3 and 4 are then combined using a OR operator to provide the result shown as a fuzzy output 168. The present invention then uses a centre of gravity defuzzification method to determine the value by how much the zone temperature should be adjusted. In this example shown in Figure 4, both the temperature no change zone and temperature rise zone are equally populated and have the same profile, thus the centre of gravity lies in between each zone. At the point where the centre of gravity intersect the x axis the change in zone temperature value is derived. In this example the centre of gravity lies intersects the x-axis at a value of 1.5, and hence the temperature should therefore be increased by 1.5°.

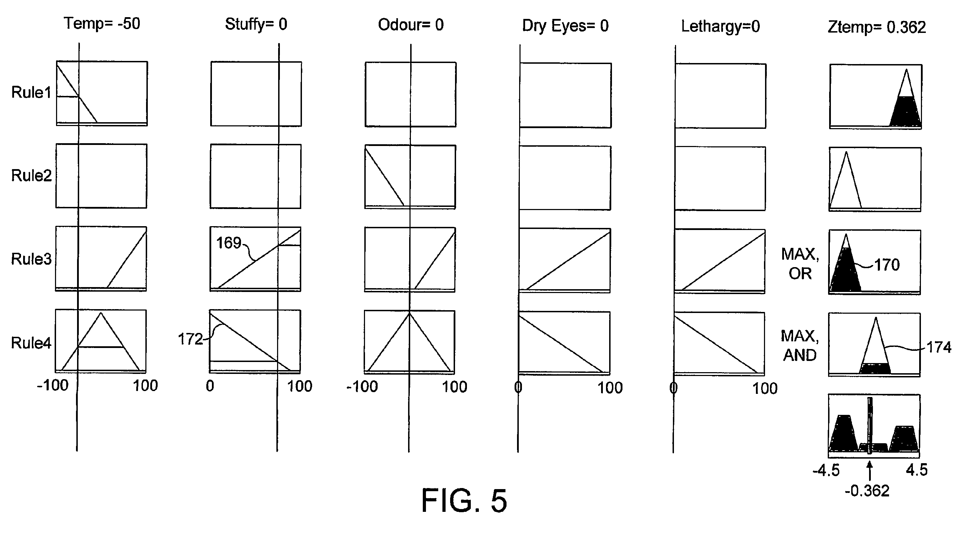

An alternative result where the occupant is feeling slightly cool and has a perception of being too stuffy is shown in Figure 5. The temperature perception of being too cool (that is temperature = ⁻50) remains the same as in the first example illustrated in Figure 4, but the occupant has also input a sensation that they are feeling too stuffy. In this example stuffiness = 75 out of a maximum value of 100. Figure 5 shows that the output from Rule 1 and 2 remains the same than in the first example. However, the occupant's perception of stuffiness now changes the output from Rules 3 and 4. With regards to Rule 3, the stuffiness value has a membership in the Rule 3 stuffiness set 169 of roughly 80%. This relates to a membership of roughly 80% in the reduced temperature result set 170 from Rule 3. Also, the stuffiness input value of 75 has a membership of roughly 25% in the stuffiness set 172 in Rule 4. Thus, the results from Rule 4 are changed and the no change to temperature set 174 has a membership of roughly 25%. Thus, it can be seen that the results of a combination of Rules 1, 2, 3 and 4 is substantially changed in this example with respect to the first example (shown in Figure 4). Taking the centre of gravity approach, it can be seen that the zone temperature should be reduced by -0.362° as a result of the occupants perception of stuffiness equalling 75% interlinked with the occupant's perception of feeling cold.

### Zone airflow sub-engine

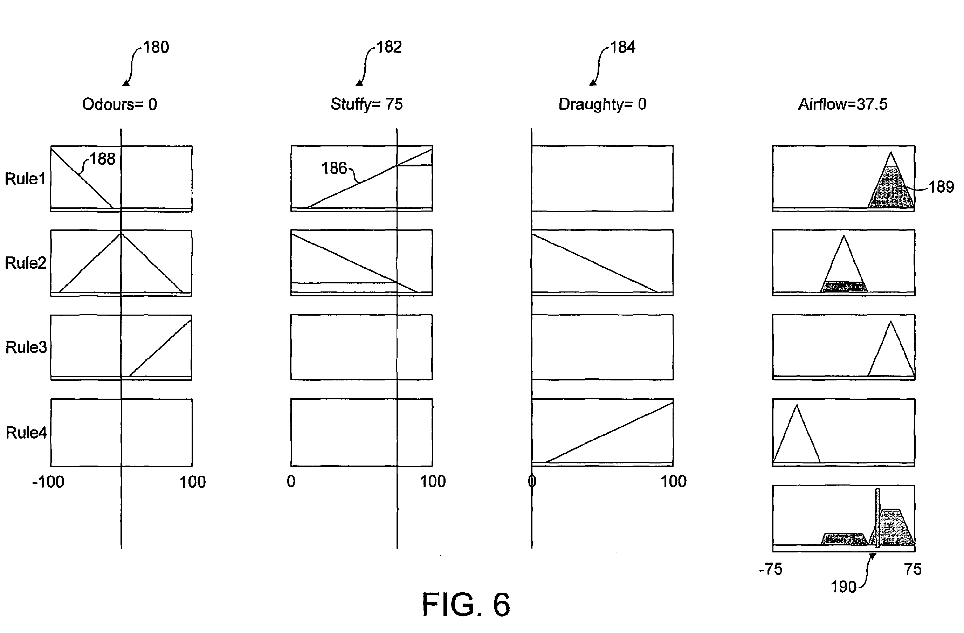

Figure 6 shows the Rules used for the zone air flow fuzzy logic sub-engine. As shown in Figure 2, the variables used by the zone air flow sub-engine occupants perception of odours 180, stuffiness 182 and whether the occupants are feeling drafty 184. This Rule-base uses four rules which are as follows:
Rule 1 - If (odour is perceived as inside) or (if the occupant is feeling too stuffy) then raise the air flow.
Rule 2 - If (odours are neutral) and (stuffiness is neutral) and (draftiness is neutral) then air flow is not changed.
Rule 3 - If (odours is perceived as outside) then air flow is raised.
Rule 4 - If (occupant is feeling drafty) then air flow is lowered.

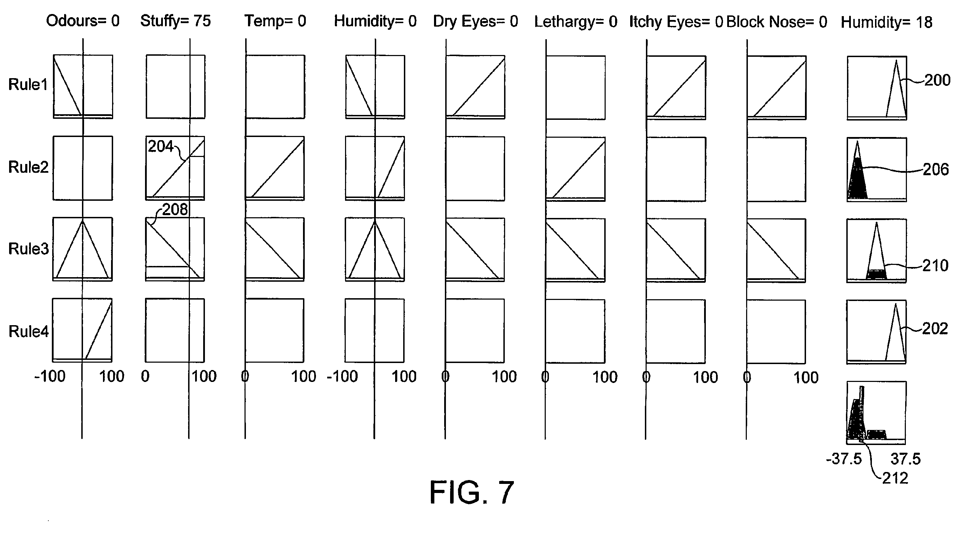

Referring to Figure 6, it can seen that the occupant has no perception of odours and has no perception of draftiness but is feeling stuffy. Rule 1 in this fuzzy logic sub-engine thus returns a relatively high membership 186 in the stuffy fuzzy logic set in Rules 1. No membership is returned in the odours set 188 of Rule 1 as illustrated in Figure 7. Thus, the membership 189 in the raised air flow set result of Rule 1 is thus equal to the value of the membership in the stuffy set of Rule 1. Rules 3 and 4 return a zero membership value because none of the input values by the occupant intercept a fuzzy set in either of these rules. Rule 2 returns a maximum membership value in the odours 180 and draftiness 184 column (in accordance with the fuzzy logic sets shown in Figure 7 from Rule 2) and a low membership in the stuffiness fuzzy set 182. The result of Rule 2 is obtained by combining all the fuzzy sets in the Rule 2 sets using a AND operator (in other words, the membership to be filled in the no change result fuzzy set is the minimum membership of either of the odourness, stuffiness or draftiness sets). As previously shown in the zone temperature examples above, the final result is achieved by combining each of Rules 1, 2, 3 and 4 results using a OR operator and the centre of gravity of the final result is taken to provide the crisp value 190 by which the air flow should be adjusted. In the example shown in Figure 7, the air flow is shown to be increased by a value of 37.5 within a range of -75 to +75.

### Humidity sub-engine

Figure 7 shows the rules base for the humidity fuzzy logic sub-engine. In this sub-engine there are eight input parameters from the occupant used by the rules 1, 2, 3 and 4, which are as follows:
Rule 1 - if (odourness is from the inside) or (humidity is too dry) or (the occupant has dry eyes) or (occupant has itchy eyes) then raise humidity.
Rule 2 - If (occupant is stuffy) or (temperature is too high) or (humidity is too high) or (the occupant is feeling lethargic) then lower humidity
Rule 3 - If (odour is OK) and (stuffy is Ok) and (temperature is OK) and (humidity is OK) and (the occupant is not suffering from dry eyes and lethargy and itchy eyes and a blocked nose) then humidity is unchanged
Rule 4 - If (odour is from outside) then humidity is raised.

In the examples shown in Figure 7 the occupant is not suffering from dry eyes, lethargy, itchy eyes or a blocked nose, the occupant sees the humidity, temperature and odours to be OK, but the occupant has a perception of feeling stuffy (stuffy=75). It can be seen that these input values from the occupant into Rule 1 do not return any memberships in each of the fuzzy logic result set (raise humidity) 200 of Rule 1. Likewise, the inputs do not return any memberships in Rule 4's fuzzy logic result set 202. However, there is a high membership in the stuffy fuzzy logic set 204 of Rule 2 and so the humidity lower fuzzy logic set 206 has a high membership in the result of Rule 2. Rule 3 has a low membership in the fuzzy logic set 208 for stuffiness but a high membership in all the remaining sets, as indicated by the shaded areas associated in the Rule 2 fuzzy logic sets. Thus, combining all of these Rule 3 results using an AND operator results in a low membership for the humidity no change results fuzzy logic set 210. The results of Rules 1, 2, 3 and 4 are combined using the OR function (as previously described) and the centre of gravity of the resulting memberships indicates 212 that a reduction in humidity of -18.8 (within the range of -37.5 to +37.5) would be sufficient to remedy the occupants feeling of stuffiness.

### Outside airflow sub-engine

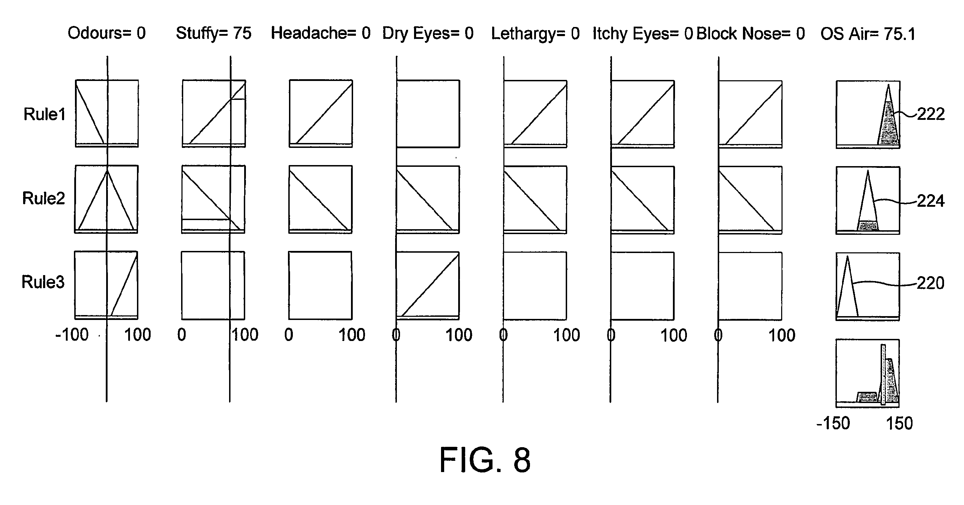

Figure 8 shows the Rule set for the outside air sub-engine where the occupants perception of odours, stuffiness and whether the occupant has a headache, dry eyes, is feeling lethargic, has itchy eyes or has a blocked nose are all used by Rules 1, 2 and 3 which are as follows:
Rule 1 - If (odours are from the inside) or (the occupant is feeling stuffy) or (the occupant has a headache) or (is feeling lethargic) or (has itchy eyes) or (has a blocked nose) then raise outside air supply.
Rule 2 - If (odour is OK) and (stuffy is low) and (the occupant is not suffering from a headache) and (dry eyes is OK) and (lethargy is OK) and (itchy eyes is OK) and (blocked nose is OK) then outside air supply is not changed.
Rule 3 - if (odour is outside) or (the occupant has dry eyes) then outdoor air supply is lowered.

As described previously, it can be seen that Rule 3 returns a zero membership 220 whereas Rule 1 returns a high membership in the raise outside air result set 222 and Rule 2 returns a relatively low membership in outside air is not changed result fuzzy result set 224.

The results from Rule 1, 2, and 3 are combined using the OR function and the centre of gravity is taken of the resulting memberships which, in this example, indicate that the outside air supply should be increased by 75.1 (within a range -150 to +150). This value of outside air can be interpreted by the BEMS as a period for the HVAC system to offer more or a maximum amount of outside air to be introduced into the environment. The period of providing for the fresh air can be varied depending on the occupant's demands from the occupant input interface which derives this sub-engine's outcome.

### Supply temperature sub-engine

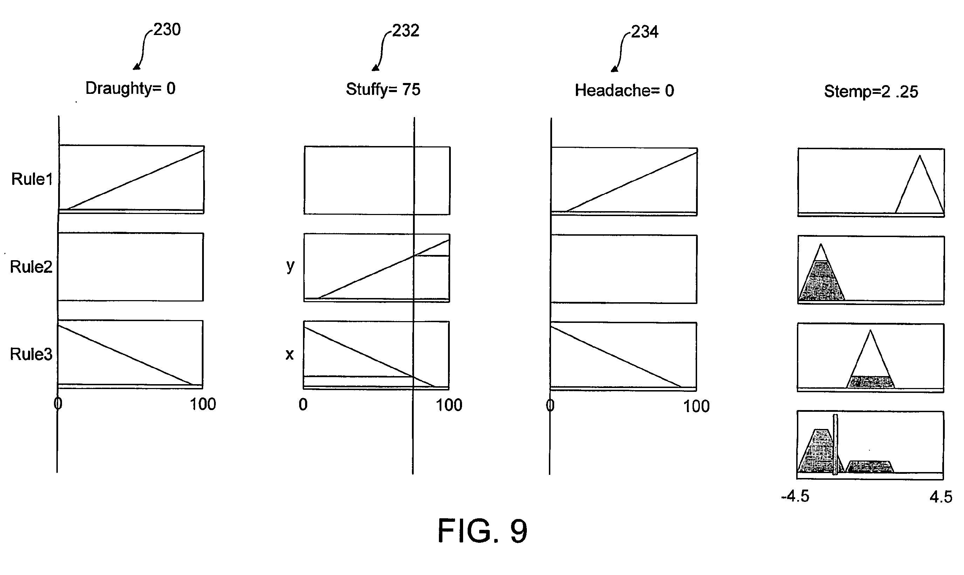

Figure 9 shows the rules base used to determine the supply temperature in the supply temperature fuzzy logic sub-engine. This sub-engine uses the data regarding the occupants perception of draftiness 230, stuffiness 232 and whether they have a headache 234 to determine the supply temperature to the environment in which the occupant is located. Three rules are used, namely Rule 1, 2 and 3, which are as follows:
Rule 1 - If (occupant is feeling drafty) or (occupant has a headache) then raise supply temperature.
Rule 2 - If (the occupant is feeling stuffy) then lower supply temperature.
Rule 3 - If (the occupant is not feeling drafty) and (occupant is not feeling stuffy) and (occupant does not have a headache) then do not change supply temperature.

As with the previous examples, this rules base comprises fuzzy logic sets and the input value of perceived comfort from an occupant. As previously, the results from each rule are combined using the OR function and the resulting centre of gravity of the membership of the area is used to determine a change in supply temperature. In this example the supply temperature should be reduced by 2.25° and the occupant has a 75% perception of stuffiness but is not suffering from a headache and the occupant does not feel drafty.

The corrective actions required for each of the occupants discomforts perceptions are derived from the BSRIA guidelines, and a summarised in table 1 below.

**Table 1**

| Occupants discomfort sensation | HVAC corrective action | | | | |
|---|---|---|---|---|---|
| | Zone temperature | zone humidity | air supply rate | outdoor air supply | Supply temperature |
| too hot | lower | lower | | | |
| too cold | raise | | | | |
| too humid | | lower | | | |
| too dry | | raise | | | |
| too stuffy | lower | lower | raise | raise | lower |
| too draughty | | | lower | | raise |
| outside odour | lower | raise | raise | lower | |
| inside odour | lower | raise | raise | raise | |
| headaches | | | | raise | lower |
| dry eyes | lower | raise | | lower | |
| lethargic | lower | lower | | raise | |
| itchy eyes | | raise | | raise | |
| blocked nose | | raise | | raise | |

It can be seen from table 1 that conflicts in corrective action might occur. For instance, if the occupant has a headache and can smell outside odours in the environment, then the corrective action for outside air supply adjustment is in conflict for these two symptoms. The use of fuzzy logic, as described above, provides a remedy to the conflict.

The present invention combines all of the occupants discomfort perceptions and corrective actions to provide a holistic solution. The degree by which these changes are made is dependent on the rules and how the fuzzy logic sets within each rule is populated. Also, the shape of the fuzzy logic set's profile within each rule is a matter of design and based on the preferred embodiment. However, the suggested range and fuzzy set's profile may be changed to tailor for different environmental conditions. Our research has shown that the generally triangular or trapezoidal shapes indicated in Figures 4-9 provide the best results. However, other fuzzy set profiles could be used without leaving the general scope of the present invention.

Embodiments of the present invention provide means for the occupants of the environment to change several characteristics of the air being supplied to their environment, and hence the atmospheric characteristics of the environment itself, such as the zone temperature, the environmental zone air flow supply rate, the supply temperature, the humidity, the ratio of outside air mixed with recycled air and odour levels. All of these characteristics have been found to have an effect on the efficiency of people working in an office. Also, the characteristics of the air supplied to the environment have been shown to contribute to the so-called sick building syndrome (SBS). As a result, the present invention allows the occupant to input their discomfort perceptions or sensations in a way which aims to alleviate SBS.

In the preferred embodiment of the present invention, the user input values are taken as the most recent input supplied to the fuzzy logic system. In an alternative embodiment, the fuzzy logic engine can obtain an average of the discomfort perceptions from all of the occupants within a room to obtain user input values for the fuzzy logic system. However, this is seen as adding an extra layer of complexity to the system. It is thought that the occupants of an environment would undertake a democratic process before a single occupant inputs the group's collective response. However, the present invention is not limited towards the inclusion of a collective democratic vote results to be embedded onto the rule-base.

Other embodiments of the present invention will be envisaged by the skilled. For instance, the present invention is not limited to occupant's comfort perceptions described above and other discomfort factors could be used, such as the general weather conditions outside of the building or the season of the year. Also, different defuzzification approaches, other than the centre of gravity approach, to derive a crisp command value can be used. For instance, the centroid, centre of largest area, first maxima, middle of maxima or height defuzzification methods can be used as an alternative. The approach to determine the environmental set-point is not limited to the example provided previously, and extends itself to other medical related symptoms. For instance, the HVAC may incorporate include means for the regulation of medical disinfection or ultra-violet treatment of supply air entering or leaving the occupied environment through similar illustrated means of fuzzy logic. The embodiment of the use of occupant feedback and its fuzzy embedded approach may also be extended to the control and isolation of air and fluid or pollutants, for example smoke movement within a multi-zoned environment in the case of fire.

Furthermore, the processing of the methodology using the means for occupant feedback for HVAC and BEMS control and regulation may be embedding as a personal computer software or via dedicated embedded hardwired electronic devices driven from a dedicated or distributed microprocessor or micro-processors in a single or clustered computing environment. For instance, a dedicated BEMS terminal might be used, or software which allows a PC to be networked to the BEMS computer might be supplied to end-users. The computer network can include the internet; the BEMS mainframe might be located in another building, or city from the terminal. The fuzzy logic methodology described can also be used as a means for basing on the occupant feedback approach which a HVAC system may incorporate, including but not limited to ventilation, energy recovery, filtration, disinfection, ionisation, odour regulation, humidification and thermal regulation to the indoor environment(s) in general and not strictly limited to the building environment which is mechanically or naturally ventilated.

## Claims

1. A method of determining a command for a device in a heating ventilation air-conditioning (HVAC) system, said device being arranged to control a characteristic of an environment occupied by one or more occupants, the method **characterised in that** it comprises the steps of:
a) obtaining a plurality of comfort related values from an occupant (102),
b) inputting said comfort related values into a rule-base, said rule-base (100) being associated with the command for the device and comprising at least one rule, each of the at least one rule having one or more of the comfort related values (102) as an input variable,
c) obtaining a result (150) from each of the at least one rule in the form of fuzzy data, and
d) defuzzifying the result thereby obtaining a crisp device command value.

2. A method according to claim 1, wherein if there are a plurality of rules in the rule-base, the method further comprising,
if there are more than one result (150), combining the fuzzy data results for each of the plurality of rules, and
defuzzifying the combination of said results thereby obtaining a crisp device command value.

3. A method according to claim 1, further comprising a plurality of rule-bases, each rule-base being associated with one of a plurality of HVAC devices, the method further comprising the step of
repeating steps a) to d) for each rule-base, thereby providing crisp device command values for each of the HVAC system devices.

4. A method according to claim 3, wherein some of the plurality of comfort related values (102) are utilised by more than one rule-base.

5. A method according to claim 1, wherein each characteristic of the environment is either
the humidity of the conditioned-air supplied by the HVAC system,
the temperature of the conditioned-air supplied by the HVAC system,
the supply rate of the conditioned-air supplied by the HVAC system,
the amount of atmosphere recycled from the environment in the conditioned-air supplied by the HVAC system, or
the temperature of the air in the environment or quality of the air in the environment.

6. A method according to any preceding claim, wherein the comfort related values (102) include the one or more occupant's perception of temperature (140), humidity (142), odours (144), airflow rate in the environment, or medical symptoms.

7. A method according to claim 6, wherein the medical symptoms include,
whether the one or more occupants are feeling lethargic or stuffy, or
whether the one or more occupants are suffering from headaches, itchy eyes, blocked nose, or dry eyes.

8. A method according to any preceding claim, wherein the one or more occupants input their comfort related values into a computer terminal, said computer terminal being part of a computer network.

9. A method according to any preceding claim, wherein the device command value is communicated to the HVAC device via a computer network.

10. A method according to claim 9, wherein the HVAC device is controlled by a building energy management system (BEMS) (130), said BEMS (130) being computer based and linked to said computer network.

11. A method according to any preceding claims, wherein the comfort related values used by the rule-base are the most recently submitted comfort related values by any one of the one or more occupants.

12. A computer programme having elements of computer code which, when run on a computer, carry out the steps of any preceding claim.

13. A carrier medium carrying the computer program according to claim 12.

14. An apparatus arranged to determine a command for a device in a heating ventilation air-conditioning (HVAC) system, said device being arranged to control a characteristic of an environment occupied by one or more occupants, the apparatus **characterised in that** it comprises,
a terminal for inputting a plurality of comfort related values from the one or more occupants,
a rule-base arranged to receive said comfort related values, said rule-base being associated with the command for the device and comprises a plurality of rules, each of the plurality of rules being arranged to receive one or more of the comfort related values (102) as an input variable and arranged to output fuzzy data results, and
a combining engine arranged for combining the fuzzy data results for each of the plurality of rules and arranged for defuzzifying the combination of said fuzzy data results to determine a crisp device command value.

## Patentansprüche

1. Verfahren zum Bestimmen eines Befehls für eine Vorrichtung in einem Heizungs-, Lüftungs- und Klimasystem (HVAC), wobei die Vorrichtung dazu ausgebildet ist, ein Merkmal einer Umgebung zu steuern, die mit einem oder mehreren Nutzern besetzt ist, wobei das Verfahren **dadurch gekennzeichnet ist, dass** es die folgenden Schritte umfasst:
a) Erhalten einer Mehrzahl Komfort-bezogener Werte von einem Nutzer (102),
b) Eingeben der Komfort-bezogenen Werte in eine Regelbasis (100), wobei die Regelbasis (100) mit dem Befehl für die Vorrichtung verknüpft ist und wenigstens eine Regel umfasst, wobei jede der wenigstens einen Regel einen oder mehrere der Komfort-bezogenen Werte (102) als eine Eingabevariable umfasst,
c) Erhalten eines Ergebnisses (150) von jeder der wenigstens einen Regel in Form von Fuzzy-Daten, und
d) Defuzzifizieren des Ergebnisses und **dadurch** Erhalten eines scharfen Vorrichtungsbefehlswertes.

2. Verfahren nach Anspruch 1, wobei, falls eine Mehrzahl von Regeln in der Regelbasis vorliegen, das Verfahren ferner umfasst,
falls mehr als ein Ergebnis (150) vorliegt, Kombinieren der Fuzzy-Datenergebnisse für jede der Mehrzahl von Regeln, und
Defuzzifizieren der Kombination dieser Ergebnisse und **dadurch** Erhalten eines scharfen Vorrichtungsbefehlswertes.

3. Verfahren nach Anspruch 1, welches ferner eine Mehrzahl von Regelbasen umfasst, wobei jede Regelbasis mit einer oder einer Mehrzahl von HVAC-Vorrichtungen verknüpft ist, wobei das Verfahren ferner den Schritt des Wiederholens der Schritte a) bis d) für jede Regelbasis umfasst, wodurch scharfe Vorrichtungsbefehlwerte für jede der HVAC-Systemvorrichtungen vorgesehen sind.

4. Verfahren nach Anspruch 3, wobei einige der Mehrzahl Komfort-bezogener Werte (102) von mehr als einer Regelbasis verwendet werden.

5. Verfahren nach Anspruch 1, wobei jedes Merkmal der Umgebung entweder die Feuchtigkeit der von dem HVAC-System gelieferten konditionierten Luft, die Temperatur der von dem HVAC-System gelieferten konditionierten Luft, die Zuführgeschwindigkeit der von dem HVAC-System gelieferten konditionierten Luft,
die Menge der von der Umgebung aufbereiten Umgebungsluft in der von dem HVAC-System gelieferten konditionierten Luft, oder
die Temperatur der Luft in der Umgebung oder die Qualität der Luft in der Umgebung
ist.

6. Verfahren nach einem der vorangehenden Ansprüche, wobei die Komfort-bezogenen Werte (102) die Wahrnehmung der Temperatur (140), Feuchtigkeit (142), Gerüche (144), Luftströmungsgeschwindigkeit in der Umgebung oder medizinischer Symptome durch den einen oder die mehreren Nutzer umfassen.

7. Verfahren nach Anspruch 6, wobei die medizinischen Symptome umfassen, ob sich der eine oder die mehreren Nutzer lethargisch fühlen oder es als stickig empfinden, oder
ob der eine oder die mehreren Nutzer an Kopfschmerzen, Augenjucken, verstopfter Nase oder trockenen Augen leiden.

8. Verfahren nach einem der vorangehenden Ansprüche, wobei der eine oder die mehreren Nutzer ihre Komfort-bezogenen Werte in einen Computerterminal eingeben, wobei der Computerterminal Teil eines Computernetzes ist.

9. Verfahren nach einem der vorangehenden Ansprüche, wobei der Vorrichtungsbefehlswert der HVAC-Vorrichtung über ein Computernetz mittgeteilt wird.

10. Verfahren nach Anspruch 9, wobei die HVAC-Vorrichtung durch ein Gebäude-Energiemanagementsystem (BEMS) (130) gesteuert wird, wobei das BEMS (130) computergestützt und mit dem Computernetz verbunden ist.

11. Verfahren nach einem der vorangehenden Ansprüche, wobei die von der Regelbasis verwendeten Komfort-bezogenen Werte diejenigen Komfort-bezogenen Werte sind, die von einem des einen oder der mehreren Nutzer zuletzt eingegeben wurden.

12. Computerprogramm mit Elementen eines Computercodes, welche, wenn sie auf einem Computer laufen, die Schritte jedes der vorangehenden Ansprüche ausführen.

13. Trägermedium, welches das Computerprogramm nach Anspruch 12 trägt.

14. Vorrichtung, welche dazu ausgebildet ist, einen Befehl für eine Vorrichtung in einem Heizungs-, Lüftungs- und Klimasystem (HVAC) zu bestimmen, wobei die Vorrichtung dazu ausgebildet ist, ein Merkmal einer Umgebung zu steuern, die mit einem oder mehreren Nutzern besetzt ist, wobei die Vorrichtung **dadurch gekennzeichnet ist, dass** sie umfasst
einen Terminal zum Eingeben einer Mehrzahl Komfort-bezogener Werte durch den einen oder die mehreren Nutzer,
eine Regelbasis, die dazu ausgebildet ist, die Komfort-bezogenen Werte aufzunehmen, wobei die Regelbasis mit dem Befehl für die Vorrichtung verknüpft ist und eine Mehrzahl von Regeln umfasst, wobei jede der Mehrzahl von Regeln dazu ausgebildet ist, einen oder mehrere der Komfort-bezogenen Werte (102) als eine Eingabevariable aufzunehmen, und dazu ausgebildet ist, Fuzzy-Datenergebnisse auszugeben, und eine Kombiniermaschine, die dazu ausgebildet ist, die Fuzzy-Datenergebnisse für jede der Mehrzahl von Regeln zu kombinieren, und die dazu ausgebildet ist, die Kombination der Fuzzy-Datenergebnisse zu defuzzifizieren, um einen scharfen Vorrichtungsbefehlswert zu bestimmen.

## Revendications

1. Procédé de détermination d'un ordre pour un dispositif dans un système de chauffage, ventilation et climatisation (HVAC), ledit dispositif étant agencé pour commander une caractéristique d'un environnement occupé par un ou plusieurs occupants, le procédé étant **caractérisé en ce qu'**il comprend les étapes qui consistent :
a) à obtenir d'un occupant (102) plusieurs valeurs associées au confort,
b) à introduire lesdites valeurs associées au confort dans une base de règles, ladite base de règles (100) étant associée à l'ordre pour le dispositif et comportant au moins une règle, chacune de la, au moins une, règle ayant une ou plusieurs valeurs (102) associées au confort en tant que variable d'entrée,
c) à obtenir un résultat (150) à partir de chacune de la, au moins une, règle sous la forme de données floues, et
d) à déflouifier le résultat afin d'obtenir une valeur d'ordre de dispositif précise.

2. Procédé selon la revendication 1, dans lequel s'il y a plusieurs règles dans la base de règles, le procédé comprend en outre,
s'il y a plus d'un résultat (150), la combinaison des résultats de données floues pour chacune des multiples règles, et
la déflouification de la combinaison desdits résultats afin d'obtenir une valeur d'ordre de dispositif précise.

3. Procédé selon la revendication 1, comprenant en outre plusieurs bases de règles, chaque base de règles étant associée à l'un de plusieurs dispositifs HVAC, le procédé comprenant en outre l'étape qui consiste
à répéter les étapes a) à d) pour chaque base de règles, de façon à produire des valeurs d'ordre de dispositif précises pour chacun des dispositifs du système HVAC.

4. Procédé selon la revendication 3, dans lequel certaines des multiples valeurs (102) liées au confort sont utilisées par plus d'une base de règles.

5. Procédé selon la revendication 1, dans lequel chaque caractéristique de l'environnement est soit
l'humidité de l'air conditionné fourni par le système HVAC,
la température de l'air conditionné fourni par le système HVAC,
le débit d'alimentation en air conditionné fourni par le système HVAC,
la quantité d'atmosphère recyclée à partir de l'environnement dans l'air conditionné fourni par le système HVAC, soit
la température de l'air dans l'environnement ou la qualité de l'air dans l'environnement.

6. Procédé selon l'une quelconque des revendications précédentes, dans lequel les valeurs (102) liées au confort comprennent la ou plusieurs perceptions par l'occupant de la température (140), de l'humidité (142), des odeurs (144), du débit d'écoulement d'air dans l'environnement ou de symptômes médicaux.

7. Procédé selon la revendication 6, dans lequel les symptômes médicaux comprennent,
si le ou les occupants ont une sensation de léthargie ou d'un manque d'air, ou
si le ou les occupants souffrent de maux de tête, ont les yeux brûlants, le nez bouché ou les yeux secs.

8. Procédé selon l'une quelconque des revendications précédentes, dans lequel le ou les occupants appliquent en entrée leurs valeurs liées au confort dans un terminal informatique, ledit terminal informatique faisant partie d'un réseau informatique.

9. Procédé selon l'une quelconque des revendications précédentes, dans lequel la valeur d'ordre du dispositif est communiquée au dispositif HVAC par l'intermédiaire d'un réseau informatique.

10. Procédé selon la revendication 9, dans lequel le dispositif HVAC est commandé par un système de gestion d'énergie d'immeuble BEMS (130), ledit BEMS (130) étant basé sur un ordinateur et relié audit réseau informatique.

11. Procédé selon l'une quelconque des revendications précédentes, dans lequel les valeurs liées au confort utilisées par la base de règles sont les valeurs liées au confort soumises le plus récemment par l'un quelconque du ou des occupants.

12. Programme informatique ayant des éléments de code informatique qui, lorsqu'ils sont mis en oeuvre sur un ordinateur, exécutent les étapes selon l'une quelconque des revendications précédentes.

13. Support portant le programme informatique selon la revendication 12.

14. Appareil agencé pour déterminer un ordre pour un dispositif dans un système de chauffage, ventilation et conditionnement d'air (HVAC), ledit dispositif étant agencé pour commander une caractéristique d'un environnement occupé par un ou plusieurs occupants, l'appareil étant **caractérisé en ce qu'**il comporte
un terminal permettant à l'occupant ou aux occupants d'introduire plusieurs valeurs liées au confort,
une base de règles agencée pour recevoir lesdites valeurs liées au confort, ladite base de règles étant associée à l'ordre pour le dispositif et comportant de multiples règles, chacune des multiples règles étant agencée pour recevoir une ou plusieurs des valeurs (102) liées au confort en tant que variable d'entrée et agencée pour délivrer en sortie des résultats de données floues,
un moteur de combinaison agencé pour combiner les résultats de données floues pour chacune des multiples règles et agencé pour déflouifier la combinaison desdits résultats de données floues afin de déterminer une valeur d'ordre de dispositif précise.
